# EUROPÄISCHE PATENTSCHRIFT

(11) **EP 2 871 117 B1**
(45) Veröffentlichungstag und Bekanntmachung des Hinweises auf die Patenterteilung: **25.10.2017**
(21) Anmeldenummer: 14191507.4
(22) Anmeldetag: 03.11.2014
(51) Int. Cl.: B62D 33/02

(54) **Nutzfahrzeug-Fahrwerk in längsverstellbarer Bauart**
Commercial vehicle chassis with adjustable length
Châssis de véhicule utilitaire de type de construction réglable en longueur

(30) Priorität: 08.11.2013 DE 102013112315
(43) Veröffentlichungstag der Anmeldung: 13.05.2015
(73) Patentinhaber: BPW-Hungária Kft., 9700 Szombathely (HU)
(72) Erfinder: Major, Zsolt, 9700 Szombathely (HU)
(74) Vertreter: Bungartz Christophersen Partnerschaft mbB Patentanwälte

(56) Entgegenhaltungen:
- DE-U1-202010 007 129
- US-A- 5 465 990
- US-A1- 2007 024 017
- US-B1- 6 213 489

## Beschreibung

Die Erfindung betrifft ein Nutzfahrzeug-Fahrwerk in längsverstellbarer Bauart mit den Merkmalen aus Patentanspruch 1.

Solche Nutzfahrzeug-Fahrwerke in längsverstellbarer Bauart sind bekannt, z. B. aus der US 5,620,195, der US 4,400,004, der DE 93 05 445 U1, der US 5,465,990, der US 6,213,489 oder der US 2007/024017 A1. Zum Einsatz kommen sie zum Beispiel bei solchen Nutzfahrzeuganhängern, bei denen das Fahrzeuggewicht je nach Belastungssituation nicht nur auf den Achsaggregaten lastet, sondern ein geringerer Gewichtsanteil auch auf der den Nutzfahrzeuganhänger mit dem motorgetriebenen Zugfahrzeug verbindenden Zugkupplung. Durch entsprechendes Längsverstellen des Achsaggregats relativ zum Nutzfahrzeugaufbau lässt sich die Verteilung der Gewichtsanteile beeinflussen und ggf. ausbalancieren.

Da zum Längsverstellen des Achsaggregats eine in Stufen arretierbare Anordnung aus einer chassisfest montierten oberen Schiene und einer hierzu längsbeweglichen unteren Schiene, an welcher das Achsaggregat befestigt ist, verwendet wird, kommt es im Fahrbetrieb zu Relativbewegungen dieser Teile. Aus der US 5,465,990 und der US 6,213,489 sind horizontal zur Längsrichtung der Schienen gerichtete, pneumatisch betriebene Bolzen-Arretieranordnungen bekannt. Diese Anordnungen arretieren die Schienen zwar in Längsrichtung, lassen jedoch Spiel zu. Die dadurch entstehenden Relativbewegungen sind zwar nur gering und im Prinzip fahrwerkstechnisch nicht problematisch, sie führen aber häufig zu unangenehmem Rattern bzw. Klappern.

Der Erfindung liegt die Aufgabe zugrunde, das bei derartigen Nutzfahrzeug-Fahrwerken häufig unangenehme Rattern bzw. Klappern im Bereich der Längsverstellung zumindest zu reduzieren.

Zur **Lösung** wird bei einem Nutzfahrzeug-Fahrwerk mit Merkmalen aus Patentanspruch 1 vorgeschlagen.

Durch eine Klemmeinrichtung, deren Bestandteil ein die Klemmkraft erzeugender Arbeitszylinder mit Arbeitsrichtung quer zu der Längsrichtung des Schienenpaars ist, lassen sich Relativbewegungen zwischen oberer und unterer Schiene des Schienenpaars weitgehend reduzieren, so dass es im Fahrbetrieb zu keinem nennenswerten Rattern bzw. Klappern im Bereich der Längsverstellung kommen kann. Demgegenüber kann die aus dem Stand der Technik bekannte Arretierung unter Verwendung einer ausschließlichen Bolzenverriegelung mit der Zeit ausschlagen, wodurch es zu Toleranzen mit der Folge eines zunehmenden Ratterns bzw. Klapperns kommt.

Als Druckmedium für den Arbeitszylinder eignet sich besonders Hydraulikflüssigkeit, da Nutzfahrzeuge häufig über eine entsprechende Hydraulikversorgung verfügen.

Mit einer Ausgestaltung wird vorgeschlagen dass sich die das Schienenpaar bildenden Schienen jeweils aus einer Profilbasis und einer oder zwei Profilseitenwänden zusammensetzen, wobei die Klemmeinrichtung zum Gegeneinanderklemmen der Profilbasen ausgebildet ist, so dass zwischen diesen eine stark erhöhte Reibung eintritt.

Da es während der Längsverstellung, aufgrund der Verwindungen des Fahrwerks aber auch während des Fahrbetriebs, zu einer Reibung in den Kontaktbereichen der beiden Schienen kommt, was mit einer entsprechenden Verschleißänfälligkeit verbunden ist, wird mit einer Ausgestaltung ein zwischen der oberen Schiene und der unteren Schiene angeordnetes, sich in Längsrichtung zumindest über den Bereich der Klemmung erstreckendes Verschleißblech vorgeschlagen.

Ferner wird vorgeschlagen, dass der Arbeitszylinder ein einen Arbeitskolben umschließendes Zylindergehäuse sowie eine aus dem Zylindergehäuse herausführende Kolbenstange umfasst, an deren freiem Ende eine Druckplatte mit zu dem Zylindergehäuse gerichteter Druckfläche angeordnet ist. Das Zylindergehäuse ist außen an einer der zwei Schienen des Schienenpaars befestigt, und die. Kolbenstange führt durch diese Schiene und durch ein Langloch in der anderen Schiene des Schienenpaars hindurch. Indem sich die Druckplatte zu beiden Seiten des Langlochs der anderen Schiene abstützt, werden die beiden Schienen durch Druckausübung gegeneinander gepresst und damit gegenseitig verklemmt. Bevorzugt wird hierbei eine Anordnung, bei der der Arbeitszylinder an der unteren Schiene befestigt ist, und sich die Druckplatte von oben her gegen die obere Schiene abstützt.

Mit einer weiteren Ausgestaltung wird vorgeschlagen, dass sich zwischen der Profilbasis der oberen Schiene und einem oberhalb angeordneten Längsträger des Fahrzeugchassis ein vertikaler Freiraum befindet. Dieser Freiraum sollte, um der Druckplatte eine ausreichende vertikale Beweglichkeit zwischen den Zuständen Klemmen und Lösen zu ermöglichen, mindestens das 1,5-fache der Bauhöhe der Druckplatte betragen.

In Bezug auf die Montierbarkeit des Nutzfahrzeug-Fahrwerks ist von Vorteil, wenn die Breite des Langlochs größer als die Dicke der Kolbenstange und kleiner als die Breite der Druckplatte ist, wobei das Langloch auf einem Längsabschnitt mit einer schlüssellochartigen Erweiterung versehen ist, deren Breite größer als die Breite der Druckplatte ist. Durch den schlüssellochartig erweiterten Abschnitt des Langlochs besteht die Möglichkeit, bei der Montage des Achsaggregats die Druckplatte durch diese Erweiterung hindurchzuführen. Dies ist insbesondere deshalb von Vorteil, da sich die Druckplatte der Klemmeinrichtung in einem Bereich befindet, in dem sie von außen her nicht zugänglich ist.

Ferner vorgeschlagen wird eine auf einem zweiten Längsabschnitt des Schienenpaars angeordnete zweite Klemmeinrichtung, deren Druckplatte sich zu beiden Seiten eines auf diesem zweiten Längsabschnitt angeordneten, zweiten Langlochs abstützt, wobei auch das zweite Langloch mit einer schlüssellochartigen Erweiterung versehen ist, und wobei sich die beiden schlüssellochartigen Erweiterungen auf unterschiedlichen Längspositionen, bezogen auf die Längserstreckung des jeweiligen Langlochs, befinden. Durch diese Ausgestaltung wird erreicht, dass es über die Klemmeinrichtungen stets und in jeder Relativposition zu einem Mindestmaß einer vertikalen Verriegelung der beiden Schienen kommt. Denn wenn die Druckplatte des einen Arbeitszylinders durch den entsprechenden schlüssellochartig erweiterten Abschnitt der oberen Schiene herausgelangen kann, ist dergleichen in Bezug auf die Druckplatte des anderen Arbeitszylinders nicht möglich, vielmehr ist hier zumindest ein Mindestmaß an vertikaler Verriegelung zwischen unterer und oberer Schiene noch gewährleistet.

Zur Erzielung einer besonders reparatur- und wartungsfreundlichen Konstruktion wird mit einer weiteren Ausgestaltung auch für die untere Schiene ein Langloch vorgeschlagen, durch das die Kolbenstange hindurchführt, wobei sich auf einer anderen Längsposition des Langlochs eine schlüssellochartige Erweiterung befindet, deren Breite größer ist, als die Breite der Druckplatte. Diese Ausgestaltung erleichtert die Montage und Demontage der Klemmeinrichtung, etwa im Fall eines notwendigen Austauschs des Arbeitszylinders. Ein Trennen der Fahrwerks-Längsverstellung ist hierzu nicht erforderlich, vielmehr wird die Klemmeinrichtung, nachdem ihre Verschraubung gelöst wurde, zunächst bis zu jener Längsposition bewegt, auf der die untere Schiene die schlüssellochartige Erweiterung aufweist, und ist dann nach unten absenkbar und somit herausnehmbar. Erzielt wird also eine besonders wartungsfreundliche Konstruktion.

Für eine erhöhte Sicherheit wird, zusätzlich zu dem beschriebenen Klemmmechanismus, eine gegenseitige mechanische Längsverriegelung der beiden Schienen des Schienenpaars vorgeschlagen. Vorzugsweise umfasst diese mechanische Längsverriegelung ein beweglich an der unteren Schiene gelagertes Bolzenelement und eine in einer Profilseitenwand der oberen Schiene ausgebildete Arretieröffnung zur Aufnahme des Bolzenelements, wobei die Arretieröffnung als vertikales Langloch ausgebildet ist. Durch Gestaltung der Arretieröffnung als vertikales Langloch arbeitet die mechanische Längsverriegelung auch dann noch zuverlässig, wenn es, vor allem im Fall eines Verschleißblechs zwischen den beiden Schienen des Schienenpaars, zu einem starken Verschleiß und einer damit einhergehenden Vergrößerung der Toleranzen im Klemmbereich gekommen ist.

Weitere Vorteile und Einzelheiten ergeben sich auf der nachfolgenden Beschreibung eines Ausführungsbeispiels, wobei auf die Zeichnung Bezug genommen wird. Darin zeigen:
- Fig. 1: in Seitenansicht Teile eines Nutzfahrzeuganhängers mit einem darunter montierten Fahrwerk in längsverstellbarer Bauart; dargestellt ist hier eine hintere Endposition des Fahrwerks;
- Fig. 2: unter Weglassen des Nutzfahrzeugaufbaus eine Draufsicht auf das Fahrwerk; dargestellt ist hier eine vordere Endposition des Fahrwerks;
- Fig. 3a: eine teilweise geschnittene Ansicht der in Fig. 1 bezeichneten Einzelheit "IIIa", nämlich eine mit einem hydraulischen Zylinder arbeitende Klemmeinrichtung, wobei die Klemmeinrichtung im gelösten Zustand wiedergegeben ist;
- Fig. 3b: dieselben Elemente wie in Fig. 3a, wobei die Klemmeinrichtung im Klemmzustand wiedergegeben ist;
- Fig. 4: eine perspektivische Ansicht von schräg unten auf einen Ausschnitt des Fahrwerks;
- Fig. 5: eine Ansicht von schräg unten entsprechend der in Fig. 4 eingezeichneten Blickrichtung "V".

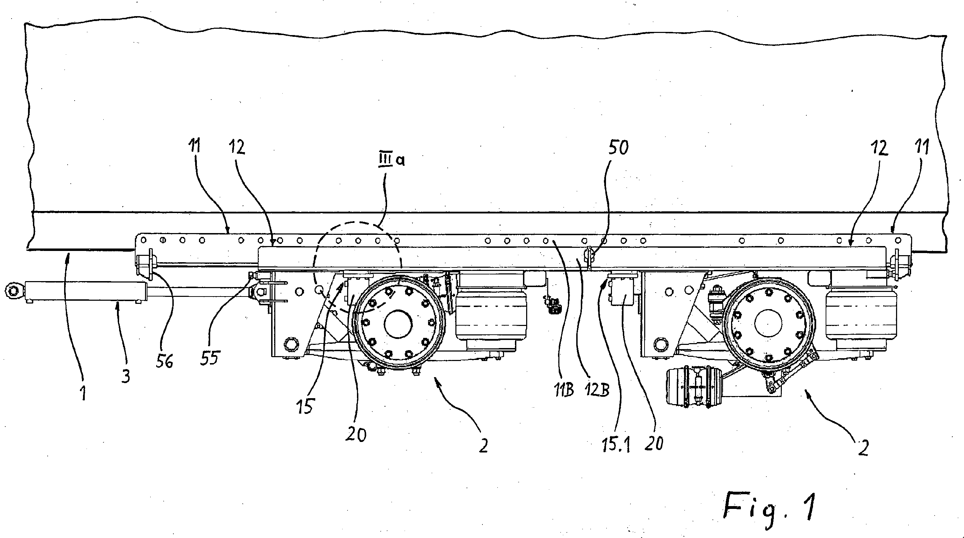

Die Fig. 1 ist eine Teilansicht auf einen Nutzfahrzeuganhängers mit darunter montiertem Fahrwerk in längsverstellbarer Bauart. Solche Fahrwerke kommen vor allem bei solchen Nutzfahrzeuganhängern zum Einsatz, bei denen das Fahrzeuggewicht nicht nur auf den Achsaggregaten lastet, sondern zum Teil auch auf der den Anhänger mit dem Zugfahrzeug verbindenden Zugkupplung. Durch Längsverstellen der Achsaggregate relativ zum Fahrzeugchassis 1 lässt sich die Verteilung der Gewichtsanteile beeinflussen und ggf. ausbalancieren.

Die Längsverstellung ist stufenlos und sie erfolgt unter Verwendung eines horizontal arbeitenden Hydraulikzylinders 3, dessen eines Ende mit einem Punkt am Fahrzeugchassis 1, und dessen anderes Ende mit dem Achsaggregat bzw. den Achsaggregaten 2 verbunden ist. Der Einsatz des Hydraulikzylinders 3 setzt voraus, dass das Fahrzeug entweder über eine eigene Hydraulikversorgung verfügt, oder hierfür die Hydraulikversorgung des motorgetriebenen Zugfahrzeugs zur Verfügung steht, was bei Fahrzeugen für den Agrarbereich häufig der Fall ist.

Das auf der Zeichnung wiedergegebene Nutzfahrzeug-Fahrwerk besteht aus zwei nichtangetriebenen Achsaggregaten 2 mit daher insgesamt vier Fahrzeugrädern. Die im Folgenden beschriebenen Maßnahmen lassen sich aber ebenso auch bei Einachs-Aggregaten oder Dreiachs-Aggregaten realisieren.

Grundlage der längsverstellbaren Bauart ist eine Anordnung aus zwei zueinander längsverschieblichen Schienen 11, 12, die jeweils als Profile ausgebildet sind und gemeinsam ein Schienenpaar bilden. Die obere Profilschiene 11 ist fest mit dem Fahrzeugaufbau verbunden, wozu sie unter dem vorhandenen Längsträger 1 des Fahrzeugchassis verbolzt ist. Hingegen ist die untere Profilschiene 12 fest mit dem Achsaggregat verbunden, bei dem hier beschriebenen Ausführungsbeispiel also mit den beiden Achsaggregaten 2 des Tandemfahrwerks.

Die obere Profilschiene 11 ist ein nach oben offenes U-Profil, ebenso ist die untere Profilschiene 12 ein nach oben offenes U-Profil. Die beiden Profilseitenwände 12B der unteren Schiene 12 weisen zueinander eine größere Breite auf, als die beiden Profilseitenwände 11B der oberen Schiene 11, wodurch die untere Schiene 12 als Längskanal gestaltet ist, in dem die obere Schiene 11 längsverschieblich geführt ist.

Fig. 1 lässt ferner erkennen, dass die Profilseitenwände 11B der oberen Schiene 11 etwas höher ragen, als die Profilseitenwände 12B der unteren Schiene 12 des Schienenpaares.

Im Folgenden werden Maßnahmen beschrieben, um die beiden Schienen 11, 12 zumindest, während des Fahrbetriebs miteinander zu verklemmen. Durch den mit dem Klemmen verbundenen Reibschluss der zu verbindenden Bauteile wird das bei verstellbaren Nutzfahrzeug-Fahrwerken häufig unangenehme Rattern bzw. Klappern im Bereich der Fahrwerk-Längsverstellung reduziert.

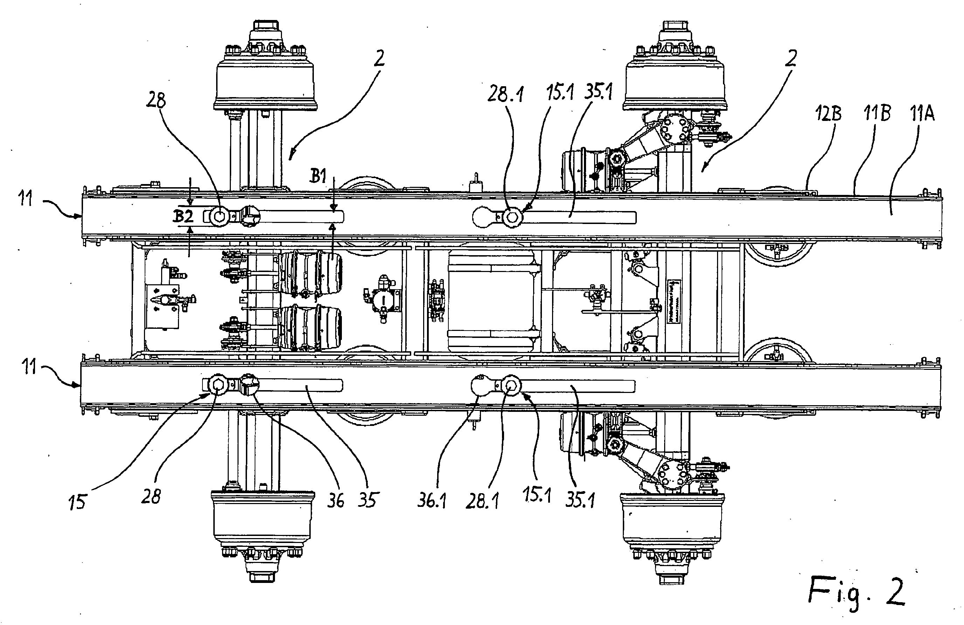

Gemäß Fig. 2 ist sowohl das rechte Schienenpaar, als auch das linke Schienenpaar mit jeweils einer ersten Klemmeinrichtung 15 und einer weiteren Klemmeinrichtung 15.1 versehen, wobei sich die Klemmeinrichtung 15 in Fahrtrichtung weiter vorne als die weitere Klemmeinrichtung 15.1 befindet.

Bestandteil jeder Klemmeinrichtung 15, 15.1 ist ein druckmittelbetätigter Arbeitszylinder 20 mit Arbeitsrichtung quer zu der Längsrichtung des Schienenpaars 11, 12. Als Arbeitszylinder 20 eignet sich, wegen der im Fahrzeug verfügbaren Hydraulikversorgung, insbesondere ein Hydraulikzylinder. Weitere Bestandteile sind ein einen Arbeitskolben umschließendes Zylindergehäuse 21 des Arbeitszylinders 20, eine aus dem Zylindergehäuse herausführende Kolbenstange 22, und eine an deren freiem Ende befestigte Druckplatte 28 mit zu dem Zylindergehäuse 21 gerichteter Druckfläche 28A. Die Druckplatte 28 hat die Form einer runden Scheibe und ist mit der Kolbenstange verschraubt.

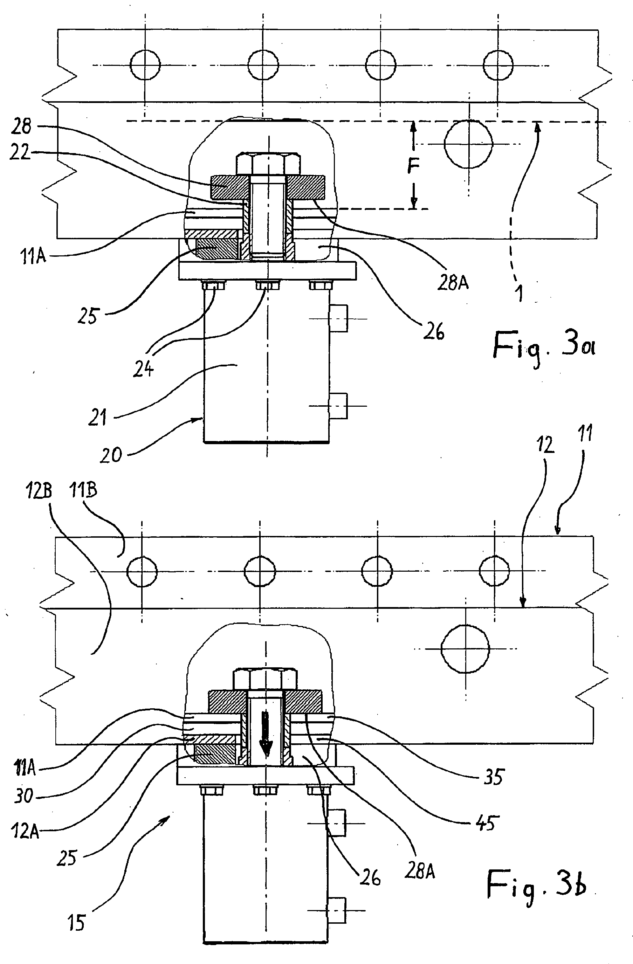

Das Zylindergehäuse 21 ist mittels mehrerer Schrauben 24 lösbar an einer Montageplatte 25 befestigt. Die Montageplatte 25 ist von unten gegen die Profilbasis 12A der unteren Schiene 12 geschweißt. Sie ist vorzugsweise rund, hat einen zentralen Durchtritt für die Kolbenstange 22 und eine sich von dem Durchtritt aus radial in Schienenlängsrichtung erstreckende Öffnung 26 (Fig. 3a), die breiter ist als der Durchmesser der Kolbenstange 22.

Die Kolbenstange 22 des Arbeitszylinders ist von solcher Länge, dass sie durch die Montageplatte 25, durch die Profilbasis 12A der unteren Schiene 12, durch die Profilbasis 11A der oberen Schiene 11 sowie durch ein zwischen den Profilbasen 11A, 12A angeordnetes Verschleißblech 30 ragt. Für den Durchtritt der Kolbenstange 22 sind die beiden Profilbasen 12A, 11A und ist ebenso das Verschleißblech 30 mit entsprechenden Öffnungen versehen, wobei diese Öffnungen Langlöcher sind, die sich in Schienenlängsrichtung erstrecken.

Hierzu lässt Fig. 2 die betreffenden Langlöcher in der oberen Schiene 11 erkennen, und zwar ein in Fahrtrichtung vorderes Langloch 35 für den Durchtritt der Kolbenstange 22 der vorderen Klemmeinrichtung 15, und ein in Fahrtrichtung hinteres Langloch 35.1 für die Kolbenstange der hinteren Klemmeinrichtung 15.1.

Gemäß Fig. 2 ist die Breite B1 des Langlochs 35, 35.1 etwas größer als die Dicke der Kolbenstange 22, aber deutlich geringer als die Breite B2, also der Durchmesser der runden Druckplatte 28, 28.1. Außerdem ist jedes Langloch 35, 35.1 auf einer Längsposition, die nicht die Längsposition ist, auf der sich die aktive Klemmeinrichtung befindet, mit einer schlüssellochartigen Erweiterung 36, 36.1 versehen. Deren Breite ist etwas größer als die Breite B2 bzw. der Durchmesser der Druckplatte 28, 28.1. Durch die schlüssellochartigen Erweiterungen 36, 36.1 besteht die Möglichkeit, zu Montagezwecken die jeweilige Druckplatte 28, 28.1 durch diese Erweiterung 36, 36.1 vertikal hindurchzuführen.

Würden die Erweiterungen 36, 36.1 fehlen, ließe sich das Achsaggregat einschließlich der unteren Schiene 12 nur dann von unten gegen die obere Schiene 11 setzen, wenn zuvor die Druckplatten 28 entfernt wären. Die Druckplatten 28 befinden sich aber in einem Bereich, in dem sie für Montagearbeiten nicht zugänglich sind.

Zusätzlich zu der primären Aufgabe, durch das Verspannen der beiden Profilschienen 11, 12 und die dadurch in Fahrzeuglängsrichtung erzielte Haftreibung an den Kontaktflächen ein Rattern bzw. Klappern im Bereich der Längsverstellung zu verhindern, haben die Klemmeinrichtungen 15, 15.1 auch eine sicherheitstechnische Funktion. Denn die Klemmeinrichtungen und insbesondere die axial fest montierten Druckplatten 28, 28.1 führen zu einer gegenseitigen vertikalen Verriegelung der beiden Schienen 11, 12, da die Arbeitszylinder 20 an der unteren Schiene 12 befestigt sind und zugleich die Druckplatten 28, 28.1 die obere Schiene 11 "hintergreifen": Dieser Hintergriff würde nur dann verloren gehen, wenn gleichzeitig die Druckplatte 28 die Erweiterung 36, und die Druckplatte 28.1 die Erweiterung 36.1 verlassen könnte. Dies aber ist ausgeschlossen wenn sich, wie aus Fig. 2 erkennbar, die zwei schlüssellochartigen Erweiterungen 36, 36.1 auf unterschiedlichen Längspositionen, bezogen auf die Längserstreckung des jeweiligen Langlochs 35 bzw. 35.1, befinden. Denn könnte die Druckplatte 28 durch die entsprechende Erweiterung 36 in der oberen Schiene 11 heraustreten, wäre dies nicht gleichzeitig für die andere Druckplatte 28.1 möglich, und umgekehrt. Es ist also stets ein Mindestmaß an vertikaler Verriegelung zwischen unterer Schiene 12 und oberer Schiene 11 gewährleistet.

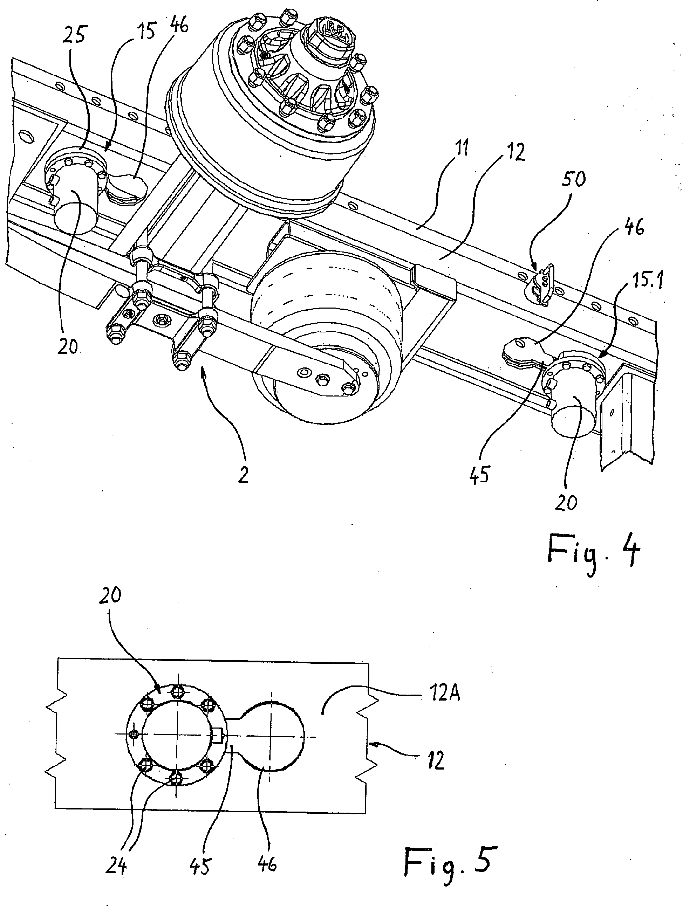

Gemäß den Figuren 4 und 5 ist auch die Profilbasis 12A der unteren Schiene 12 mit einem Langloch 45 breit genug für den Durchtritt der Kolbenstange 22 versehen. Auch das Langloch 45 ist auf einer Längsposition, die nicht die Montageposition der Klemmeinrichtung ist, zu einer schlüssellochartigen Erweiterung 46 größer als die Größe der jeweiligen Druckplatte 28, 28.1 aufgeweitet, so dass sich die Druckplatte zu Montagezwecken an dieser Stelle vertikal durch die untere Schiene 12 hindurchführen lässt.

Die Erweiterung 46 vereinfacht den Austausch des Arbeitszylinders 20. Dieser wird, nachdem die Schrauben 24 gelöst wurden, längs des Langlochs 45 bis zu der Erweiterung 46 bewegt, und ist dann einschließlich seiner Druckplatte 28 nach unten absenkbar und somit herausnehmbar. Für die Montage und Demontage des Arbeitszylinders 20 ist es daher nicht erforderlich, die komplette Einheit aus unterer Schiene 12 und Achsaggregat abzunehmen.

Die Fig. 3a zeigt die Lösestellung, und die Fig. 3b die Betriebsstellung der Klemmeinrichtung. In Fig. 3a ist der Arbeitszylinder 20 also druckentlastet, wodurch die Kolbenstange 22 mit der Druckplatte 28 angehoben ist, und die an der Druckplatte 28 unten ausgebildete Druckfläche 28A freiliegt. Selbst in dieser Situation ist noch ein ausreichender vertikaler Freiraum F zwischen der Profilbasis 11A der oberen Schiene 11 und dem oberhalb angeordneten Längsträger 1 des Fahrzeugchassis vorhanden. Für eine ausreichende vertikale Beweglichkeit der Druckplatte 28 sollte dieser Freiraum F mindestens das 1,5-fache der gesamten Bauhöhe der Druckplatte 28 betragen.

In Fig. 3b ist der auf Zug arbeitende Hydraulikzylinder mit Hydraulikdruck beaufschlagt. Die Druckplatte 28 wird durch den Kolben des Zylinders nach unten gezogen, und die Druckfläche 28A gegen die Profilbasis 11A der oberen Schiene 11 gepresst, wodurch diese unter Zwischenlage des Verschleißblechs 30 gegen die Profilbasis 12A der unteren Schiene 12 gepresst wird. Die beiden Schienen werden also spielfrei gegeneinander verspannt. Durch eine entsprechende Ventilschaltung der Hydraulikversorgung wird zumindest während der Fahrt der Hydraulikdruck aufrechterhalten.

Für die Praxis reicht es oft aus, wenn die Fahrwerk-Längsverstellung nicht stufenlos arbeitet, sondern nur eine vordere und eine hintere Position (Endpositionen) möglich sind. Der Arbeitsbereich der Hydraulikzylinder 3 sollte dann etwas größer sein, als der Abstand zwischen diesen beiden Längspositionen. Hierzu zeigt Fig. 1 die hintere Endposition des Fahrwerks, Fig. 2 hingegen die vordere Endposition des Fahrwerks.

Zur Begrenzung der jeweiligen Endposition ist auf Seiten des Achsaggregats ein Anschlagbolzen 55 vorgesehen, und auf Seiten des Fahrzeugchassis ein entsprechender Gegenanschlag 56. Anschlagbolzen 55 und Gegenanschlag 56 sind jeweils für beide Endpositionen und auf jeder Fahrzeugseite vorhanden. Vorzugsweise ist der Anschlagbolzen 55 an der unteren Schiene 12 befestigt, und der Gegenanschlag 56 an der oberen Schiene 11. Für eine genaue Einstellung kann die Länge des Anschlagbolzens 55 mittels eines Gewindes justierbar sein.

Die Kombination aus Anschlagbolzen 55 und Gegenanschlag 56 führt nicht nur zu einer Festlegung der zwei Endpositionen des längsverstellbaren Fahrwerks, sondern bewirkt auch eine zusätzliche mechanische Verriegelung seitlich und nach oben und unten, sofern der Gegenanschlag 56 eine Art Sackloch ist, in welches der Anschlagbolzen 55 eintaucht.

Für eine erhöhte Sicherheit ist eine zusätzliche gegenseitige mechanische Längsverriegelung der beiden Schienen 11, 12 vorhanden. Hierzu befindet sich an der unteren Schiene 12 ein beweglich gelagertes Bolzenelement 50, welches zur Verriegelung in eine von zwei an der Profilseitenwand 11B der oberen Schiene 11 ausgebildeten Arretieröffnungen eingreift. Wenn die Arretieröffnungen als vertikale Langlöcher gestaltet sind, arbeitet die mechanische Längsverriegelung auch dann noch zuverlässig, wenn sich z. B. im Laufe der Zeit die Dicke des Verschleißblechs 30 verringert, und sich damit die Höhentoleranz zwischen den beiden Schienen 11, 12 verändert.

### Bezugszeichenliste

- 1: Fahrzeugchassis, Längsträger
- 2: Achsaggregat
- 3: Hydraulikzylinder
- 11: obere Schiene
- 11A: Profilbasis
- 11B: Profilseitenwand
- 12: untere Schiene
- 12A: Profilbasis
- 12B: Profilseitenwand
- 15: Klemmeinrichtung
- 15.1: Klemmeinrichtung
- 20: Arbeitszylinder
- 21: Zylindergehäuse
- 22: Kolbenstange
- 24: Schrauben
- 25: Montageplatte
- 26: Öffnung
- 28: Druckplatte
- 28.1: Druckplatte
- 28A: Druckfläche
- 30: Verschleißblech
- 35: Langloch
- 35.1: Langloch
- 36: Erweiterung
- 36.1: Erweiterung
- 45: Langloch
- 46: Erweiterung
- 50: Bolzenelement
- 55: Anschlagbolzen
- 56: Gegenanschlag

- F: vertikaler Freiraum

## Patentansprüche

1. Nutzfahrzeug-Fahrwerk in längsverstellbarer Bauart, mit auf jeder Fahrzeugseite einem Schienenpaar (11, 12) aus einer chassisfest montierten oberen Schiene (11) und einer längsbeweglich zu der oberen Schiene angeordneten unteren Schiene (12), an welcher mindestens ein Achsaggregat (2) des Nutzfahrzeugs befestigt ist, und mit Klemmeinrichtungen (15) zum gegeneinander Klemmen der oberen und der unteren Schiene, **dadurch gekennzeichnet daß** das Bestandteil jeder Klemmeirichtung (15) ein druckmittelbetätigter Arbeitszylinder (20) mit Arbeitsrichtung quer zu der Längsrichtung des Schienenpaars (11, 12) ist, der ein einen Arbeitskolben umschließendes Zylindergehäuse (21) sowie eine aus dem Zylindergehäuse (21) herausführende Kolbenstange (22) umfasst, an deren freiem Ende eine Druckplatte (28) mit zu dem Zylindergehäuse (21) gerichteter Druckfläche (28A) angeordnet ist, wobei das Zylindergehäuse (21) außen an der einen Schiene (12 bzw. 11) des Schienenpaars befestigt ist, die Kolbenstange (22) durch diese Schiene (12 bzw. 11) und durch ein Langloch (35) in der anderen Schiene (11 bzw. 12) des Schienenpaars hindurchführt, und sich die Druckplatte (28) zu beiden Seiten des Langlochs (35) an der anderen Schiene (11 bzw. 12) abstützt.

2. Nutzfahrzeug-Fahrwerk nach Anspruch 1, **gekennzeichnet durch** einen Hydraulikzylinder als Arbeitszylinder (20).

3. Nutzfahrzeug-Fahrwerk nach Anspruch 1 oder 2, **dadurch gekennzeichnet, dass** sich die obere und die untere Schiene (11, 12) jeweils aus einer Profilbasis (11A, 12A) und einer oder zwei Profilseitenwänden (11B, 12B) zusammensetzt, und dass die Klemmeinrichtung (15) zum gegeneinander Klemmen der Profilbasen (11A, 12A) ausgebildet ist.

4. Nutzfahrzeug-Fahrwerk nach einem der Ansprüche 1 bis 3, **gekennzeichnet durch** ein zwischen der oberen Schiene (11) und der unteren Schiene (12) angeordnetes, sich in Längsrichtung zumindest über den Bereich der Klemmung erstreckendes Verschleißblech (30).

5. Nutzfahrzeug-Fahrwerk nach Anspruch 1, **dadurch gekennzeichnet, dass** das Zylindergehäuse (21) an der unteren Schiene (12) befestigt ist, und sich die Druckplatte (28) gegen die obere Schiene (11) abstützt.

6. Nutzfahrzeug-Fahrwerk nach Anspruch 5 in Verbindung mit Anspruch 3, **dadurch gekennzeichnet, dass** sich zwischen der Profilbasis (11A) der oberen Schiene (11) und einem oberhalb angeordneten Längsträger (1) des Fahrzeugchassis ein vertikaler Freiraum (F) von mindestens dem 1,5-fachen der Bauhöhe der Druckplatte (28) befindet.

7. Nutzfahrzeug-Fahrwerk nach einem der Ansprüche 1, 5 oder 6, **dadurch gekennzeichnet, dass** die Breite (B1) des Langlochs (35) größer als die Dicke der Kolbenstange (22) und kleiner als die Breite (B2) der Druckplatte (28) ist, und dass das Langloch (35) auf einem Längsabschnitt mit einer schlüssellochartigen Erweiterung (36) versehen ist, deren Breite größer als die Breite (B2) der Druckplatte (28) ist.

8. Nutzfahrzeug-Fahrwerk nach Anspruch 7, **gekennzeichnet durch** eine auf einem zweiten Längsabschnitt des Schienenpaars angeordnete zweite Klemmeinrichtung (15.1), deren Druckplatte (28.1) sich zu beiden Seiten eines auf diesem zweiten Längsabschnitt angeordneten, zweiten Langlochs (35.1) abstützt, wobei auch das zweite Langloch (35.1) mit einer schlüssellochartigen Erweiterung (36.1) versehen ist, und wobei sich die beiden schlüssellochartigen Erweiterungen (36, 36.1) auf unterschiedlichen Längspositionen, bezogen auf die Längserstreckung des jeweiligen Langlochs (35 bzw. 35.1), befinden.

9. Nutzfahrzeug-Fahrwerk nach einem der Ansprüche 1 oder 5 - 8, **dadurch gekennzeichnet, dass** die Kolbenstange (22) durch ein Langloch (45) in der unteren Schiene (12) hindurchführt, und dass sich auf einer anderen Längsposition dieses Langlochs (45) eine schlüssellochartige Erweiterung (46) befindet, deren Breite größer als die Breite der Druckplatte (28) ist.

10. Nutzfahrzeug-Fahrwerk nach einem der vorangehenden Ansprüche, **gekennzeichnet durch** eine gegenseitige mechanische Längsverriegelung der beiden Schienen (11, 12) des Schienenpaars.

11. Nutzfahrzeug-Fahrwerk nach Anspruch 10, **dadurch gekennzeichnet, dass** die mechanische Längsverriegelung ein beweglich an der unteren Schiene (12) gelagertes Bolzenelement (50) und eine in einer Profilseitenwand (11B) der oberen Schiene (11) ausgebildete Arretieröffnung zur Aufnahme des Bolzenelements (50) umfasst, und dass die Arretieröffnung als vertikales Langloch ausgebildet ist.

## Claims

1. Commercial vehicle chassis with an adjustable length, with, on each side of the vehicle, a pair of rails (11, 12) consisting of an upper rail (11) mounted in a manner secured to the chassis and a lower rail (12) which is arranged in a longitudinally movable manner with respect to the upper rail and to which at least one axle unit (2) of the commercial vehicle is fastened, and with clamping devices (15) for the mutual clamping of the upper and the lower rail, **characterized in that** the part of each clamping device (15) is a pressure-medium-actuated working cylinder (20) with a working direction transversely with respect to the longitudinal direction of the pair of rails (11, 12), said working cylinder comprising a cylinder housing (21) surrounding a working piston, and a piston rod (22) which leads out of the cylinder housing (21) and at the free end of which a pressure plate (28) with a pressure surface (28A) directed towards the cylinder housing (21) is arranged, wherein the cylinder housing (21) is fastened on the outside to the one rail (12 or 11) of the pair of rails, the piston rod (22) is guided through said rail (12 or 11) and through an elongated hole (35) in the other rail (11 or 12) of the pair of rails, and the pressure plate (28) is supported on the other rail (11 or 12) on both sides of the elongated hole (35).

2. Commercial vehicle chassis according to Claim 1, **characterized by** a hydraulic cylinder as working cylinder (20).

3. Commercial vehicle chassis according to Claim 1 or 2, **characterized in that** the upper and the lower rail (11, 12) are each composed of a profile base (11A, 12A) and one or two profile sidewalls (11B, 12B), and **in that** the clamping device (15) is designed for the mutual clamping of the profile bases (11A, 12A).

4. Commercial vehicle chassis according to one of Claims 1 to 3, **characterized by** an anti-wear plate (30) which is arranged between the upper rail (11) and the lower rail (12) and extends in the longitudinal direction at least over the region of the clamping.

5. Commercial vehicle chassis according to Claim 1, **characterized in that** the cylinder housing (21) is fastened to the lower rail (12), and the pressure plate (28) is supported against the upper rail (11).

6. Commercial vehicle chassis according to Claim 5 in conjunction with Claim 3, **characterized in that** a vertical clearance (F) of at least 1.5 times the overall height of the pressure plate (28) is located between the profile base (11A) of the upper rail (11) and an above-arranged longitudinal member (1) of the vehicle chassis.

7. Commercial vehicle chassis according to one of Claims 1, 5 or 6, **characterized in that** the width (B1) of the elongated hole (35) is greater than the thickness of the piston rod (22) and smaller than the width (B2) of the pressure plate (28), and **in that** the elongated hole (35) is provided on a length portion with a keyhole-like extension (36), the width of which is greater than the width (B2) of the pressure plate (28).

8. Commercial vehicle chassis according to Claim 7, **characterized by** a second clamping device (15.1) which is arranged on a second length portion of the pair of rails and the pressure plate (28.1) of which is supported on both sides of a second elongated hole (35.1) arranged on said second length portion, wherein the second elongated hole (35.1) is also provided with a keyhole-like extension (36.1), and wherein the two keyhole-like extensions (36, 36.1) are located at different longitudinal positions with respect to the longitudinal extent of the particular elongated hole (35 or 35.1).

9. Commercial vehicle chassis according to one of Claims 1 or 5-8, **characterized in that** the piston rod (22) passes through an elongated hole (45) in the lower rail (12), and a keyhole-like extension (46), the width of which is greater than the width of the pressure plate (28), is located at another longitudinal position of said elongated hole (45).

10. Commercial vehicle chassis according to one of the preceding claims, **characterized by** a mutual mechanical longitudinal locking of the two rails (11, 12) of the pair of rails.

11. Commercial vehicle chassis according to Claim 10, **characterized in that** the mechanical longitudinal locking comprises a bolt element (50) mounted movably on the lower rail (12) and a locking opening, which is formed in a profile sidewall (11B) of the upper rail (11), for receiving the bolt element (50), and **in that** the locking opening is designed as a vertical elongated hole.

## Revendications

1. Châssis de véhicule utilitaire de type de construction réglable en longueur, avec sur chaque côté du véhicule une paire de rails (11, 12) composée d'un rail supérieur (11) monté de façon fixe sur le châssis et d'un rail inférieur (12) disposé de façon mobile longitudinalement par rapport au rail supérieur, et sur lequel est fixé au moins un groupe d'essieu (2) du véhicule utilitaire, et avec des dispositifs de serrage (15) pour le serrage mutuel du rail supérieur et du rail inférieur, **caractérisé en ce que** le composant de chaque dispositif de serrage (15) est un cylindre de travail (20) actionné par un fluide sous pression avec une direction de travail transversale à la direction longitudinale de la paire de rails (11, 12), qui comprend un boîtier de cylindre (21) renfermant un piston de travail ainsi qu'une tige de piston (22) sortant du boîtier de cylindre (21), à l'extrémité libre de laquelle est disposée une plaque de pression (28) avec une face de pression (28A) dirigée vers le boîtier de cylindre (21), dans lequel le boîtier de cylindre (21) est fixé extérieurement à un premier (12 ou 11) rail de la paire de rails, la tige de piston (22) est menée à travers ce rail (12 ou 11) et à travers un trou oblong (35) dans l'autre (11 ou 12) rail de la paire de rails, et la plaque de pression (28) s'appuie sur les deux côtés du trou oblong (35) sur l'autre rail (11 ou 12).

2. Châssis de véhicule utilitaire selon la revendication 1, **caractérisé par** un cylindre hydraulique comme cylindre de travail (20).

3. Châssis de véhicule utilitaire selon la revendication 1 ou 2, **caractérisé en ce que** le rail supérieur et le rail inférieur (11, 12) se composent chacun d'une base de profilé (11A, 12A) et d'une ou de deux paroi(s) latérale(s) de profilé (11B, 12B), et **en ce que** le dispositif de serrage (15) est conçu pour le serrage mutuel des bases de profilé (11A, 12A).

4. Châssis de véhicule utilitaire selon l'une quelconque des revendications 1 à 3, **caractérisé par** une tôle d'usure (30) disposée entre le rail supérieur (11) et le rail inférieur (12), s'étendant en direction longitudinale au moins sur la région du serrage.

5. Châssis de véhicule utilitaire selon la revendication 1, **caractérisé en ce que** le boîtier de cylindre (21) est fixé au rail inférieur (12), et la plaque de pression (28) s'appuie contre le rail supérieur (11).

6. Châssis de véhicule utilitaire selon la revendication 5 en liaison avec la revendication 3, **caractérisé en ce qu'**un espace libre vertical (F) d'au moins 1,5 fois la hauteur de construction de la plaque de pression (28) se trouve entre la base de profilé (11A) du rail supérieur (11) et un longeron (1) du châssis de véhicule disposé au-dessus.

7. Châssis de véhicule utilitaire selon une des revendications 1, 5 ou 6, **caractérisé en ce que** la largeur (B1) du trou oblong (35) est plus grande que l'épaisseur de la tige de piston (22) et plus petite que la largeur (B2) de la plaque de pression (28), et **en ce que** le trou oblong (35) est muni sur une partie longitudinale d'un élargissement (36) en forme de trou de serrure, dont la largeur est plus grande que la largeur (B2) de la plaque de pression (28).

8. Châssis de véhicule utilitaire selon la revendication 7, **caractérisé par** un deuxième dispositif de serrage (15.1) disposé sur une deuxième partie longitudinale de la paire de rails, dont la plaque de pression (28.1) s'appuie sur les deux côtés d'un deuxième trou oblong (35.1) disposé sur cette deuxième partie longitudinale, dans lequel le deuxième trou oblong (35.1) est également muni d'un élargissement (36.1) en forme de trou de serrure, et dans lequel les deux élargissements (36, 36.1) en forme de trou de serrure se trouvent dans des positions longitudinales différentes, par rapport à l'extension longitudinale du trou oblong respectif (35 ou 35.1).

9. Châssis de véhicule utilitaire selon l'une quelconque des revendications 1 ou 5 à 8, **caractérisé en ce que** la tige de piston (22) est menée à travers un trou oblong (45) dans le rail inférieur (12), et **en ce qu'**il se trouve sur une autre position longitudinale de ce trou oblong (45) un élargissement (46) en forme de trou de serrure, dont la largeur est plus grande que la largeur de la plaque de pression (28).

10. Châssis de véhicule utilitaire selon l'une quelconque des revendications précédentes, **caractérisé par** un verrouillage longitudinal mécanique mutuel des deux rails (11, 12) de la paire de rails.

11. Châssis de véhicule utilitaire selon la revendication 10, **caractérisé en ce que** le verrouillage longitudinal mécanique comprend un élément de boulon (50) monté de façon mobile sur le rail inférieur (12) et une ouverture d'arrêt formée dans une paroi latérale de profilé (11B) du rail supérieur (11) destinée à recevoir l'élément de boulon (50), et **en ce que** l'ouverture d'arrêt est réalisée sous la forme d'un trou oblong vertical.
